# EUROPEAN PATENT SPECIFICATION

(11) **EP 2 417 274 B1**
(45) Date of publication and mention of the grant of the patent: **17.01.2018**
(21) Application number: 10761931.4
(22) Date of filing: 31.03.2010
(51) Int. Cl.: C22B 15/14, C22B 1/11

(54) **METHOD OF REFINING COPPER BULLION COMPRISING ANTIMONY AND/OR ARSENIC**
VERFAHREN ZUR VERFEINERUNG EINES KUPFERBARRENS MIT ANTIMON UND/ODER ARSEN
PROCÉDÉ D'AFFINAGE DE LINGOT DE CUIVRE COMPRENANT DE L'ANTIMOINE ET/OU DE L'ARSENIC

(30) Priority: 05.04.2009 SE 0950219
(43) Date of publication of application: 15.02.2012
(73) Proprietor: Boliden Mineral AB, 936 81 Boliden (SE)
(72) Inventor: BODÉN, Lars Göran, S-931 55 Skellefteå (SE); LÖVGREN, Mikael, S-932 37 Ursviken (SE)
(74) Representative: Groth & Co. KB
(86) International application number: PCT/SE2010/050358
(87) International publication number: WO 2010/117321

(56) References cited:
- WO-A1-03/025236
- WO-A1-2005/007905
- GB-A- 1 443 100
- JP-A- 2003 003 220
- US-A- 3 984 235
- US-A- 4 244 733
- US-A- 4 394 164
- US-A- 4 612 171
- US-A- 4 891 061
- US-A- 5 215 571

## Description

The present disclosure relates to a process of refining a copper bullion comprising antimony and/or arsenic in such an amount that it is difficult to extract valuable metals from the bullion using conventional metallurgical processes. The present disclosure also relates to a method of reducing the content of antimony in a copper bullion.

### Background

Copper can be produced from copper-containing ores for example by flash smelting or smelting in an electric furnace. An upper layer of slag and a lower layer of copper matte are formed in the furnace during smelting. The copper matte is transferred to a converter wherein blister copper is formed. The blister copper can be further refined by electrolysis to essentially pure elemental copper.

In addition to copper, the ores contain other valuable metals, such as gold, silver, platinum and palladium. These valuable metals may for example be extracted from the process during the electrolysis of anode copper. The valuable metals are collected in the sludge formed during the electrolysis. The sludge is removed and treated for example by pressure leaching followed by melting and refining of the leaching residue.

Moreover, many copper containing ores also comprise significant amounts of arsenic and antimony in addition to other elements. Arsenic and antimony however present problems when the copper and the other valuable metals in the ores are to be extracted. The presence of arsenic and antimony impurities leads to a build-up of these metals in the copper refining process, and may also cause environmental problems in the refining process if not handled properly. Moreover, arsenic and antimony may cause problems related to impurity during the process and be present in the extracted metals. It is therefore important to be able to remove as much of the arsenic and antimony as possible as early as one can in the process.

During smelting of a copper ore, a copper phase rich in valuable metals, and which may also be rich in antimony and arsenic, is formed. This phase is called matte and often comprises 10 % Fe, 20 % S and at least about 50 % Cu.

Moreover, various types of copper bullions may also be formed. One example is speiss which generally comprises by weight, depending on the raw materials and the process used, about 40-60 % Cu, 5-15 % Fe, 6-10 % As and 6-10 % Sb.

In order to be able to fully extract essentially all of the metal values of a copper bullion by conventional methods it is important to remove as much of the arsenic and antimony as possible. Copper bullion can be treated by means of hydrometallurgical methods, such as leaching and pressure leaching. It can also be treated by pyrometallurgical methods, such as chlorinated roasting, sulfidisation, and addition of Na₂S.

US 2003/0192404 discloses a process for treatment or removal of impurities, such as arsenic, antimony or bismuth, generated as bi-products during smelting and refining of copper concentrates. The copper ore or concentrate also containing iron and a source of bisulphate or sulfate ions is subjected to pressure oxidation at an elevated temperature and pressure in the presence of oxygen and an acidic solution containing halide ions. The by-products are subjected to the pressure oxidation together with the ore or concentrate to obtain a resulting pressure oxidation slurry containing copper and a compound of the element.

US 4,891,061 discloses a process of separating arsenic and antimony from speiss by a roasting operation. Arsenic and antimony are volatilized from speiss by roasting in the presence of a sulfur source and a carbon source. The fume from the roasting operation is contacted with water at an elevated temperature and pressure to selectively separate arsenic from the antimony. The roasted speiss is added to the copper circuit to recover the copper, silver and other metals present therein.

US 4,612,171 discloses a method for recovering metal values from copper containing and/or precious metal-containing materials which also contain antimony and/or bismuth in such high quantities as to render working-up of the materials with conventional metallurgical processes difficult or impossible. The material is subjected to a chlorination volatilization process in order to bring the antimony and/or bismuth content of the material to a level acceptable for the continued working-up of the material in conventional process stages. The chlorination process may for example be carried out on sulfidic or oxidic concentrates, matte, speiss, oxidic and metallic intermediate products.

JP 59059844 proposes to remove impurities in molten copper containing high concentrations of antimony and arsenic by blowing a powdery flux of CaCO₃ and Na₂CO₃.

US 5,849,061 discloses a method of refining high-impurity blister copper to anode quality copper by soda ash fluxing during the oxidation step of a blister copper refining stage to remove antimony and arsenic while also removing sulfur and iron. Thereafter, sulfur hexafluoride injection is made in the deoxidation step of a blister copper refining stage to remove bismuth.

WO 03/025236 discloses a method to produce blister copper or high grade matte in a smelting reactor directly from a sulfidic copper concentrate containing material and/or finely ground copper matte, whereby oxygen-containing gas, copper concentrate and/or finely ground copper matte are fed into the reactor where the activity of lime in the slag formed is high in order to increase the slagging of arsenic and antimony.

JP 2003003220 discloses a flux used for removing impurities containing As and Sb from a crude copper anode in a copper electrorefining process of copper smelting.

The above identified processes for removal of arsenic and antimony may often be expensive and/or complicated. It is therefore also quite common that certain forms of copper bullion comprising high contents of antimony are stockpiled which is unfortunate for environmental reasons and since they contain high metal values. It is therefore desirable to develop a new process for treatment of copper bullion comprising antimony and/or arsenic in such amounts as to make conventional process metallurgical process for extraction of valuable metals difficult or even impossible.

### Summary

The object of the present invention is to enable extraction of as much of the metal values of a copper bullion comprising high amounts of antimony and/or arsenic as possible. In the present disclosure, a high amount of antimony and arsenic shall be considered to be an amount which makes the extraction of valuable metals from the bullion in conventional metallurgical processes difficult, or even impossible.

The object is achieved by a process in accordance with independent claims 1 and 17. Preferred embodiments are given in the dependent claims.

The present invention constitutes a cost-efficient method of removing especially antimony from a copper bullion which in turn enables extraction of the metal values from the copper bullion by conventional methods.

In accordance with the present invention, a copper bullion comprising antimony and/or arsenic is refined by a process comprising two separate process metallurgical steps. In the first step, elements with high affinity to antimony and/or arsenic, especially iron, are removed from the copper bullion by selective conversion of these elements. The elements with high affinity to antimony and arsenic are during this step transferred to a first slag and bound therein. The first slag is thereafter removed from the surface of the melt before the next step, for example by scraping or pouring. The first slag is preferably a fayalite slag.

In the second step, antimony and arsenic are oxidized and bound in a lead oxide based second slag, preferably a lead silicate slag. The second slag is formed by the addition of a lead-containing component, such as PbO. The lead-containing component may also be for example lead-containing waste material. The second step is preferably repeated a plurality of times.

The first and/or second step may be performed under gas stirring. The steps may also suitably be performed in the same furnace, for example a rotating furnace.

### Detailed description

In the present disclosure, the term copper bullion should be considered in its broadest sense and therefore incorporates *i*.*a*. copper based alloys, blister copper, and speiss.

The present invention is based on the idea of oxidizing arsenic and antimony to a lead silicate slag. It has however been found that the formation of a lead silicate slag capable of binding a sufficient amount of arsenic and antimony is rendered difficult due to the presence of elements with high affinity to arsenic and antimony, especially iron, in the copper bullion. It is believed that iron obstructs the formation of a lead silicate slag by reducing the lead down into the metallic phase.

In order to overcome this problem, the process according to the present invention comprises two separate process metallurgical steps. In the first step, elements having high affinity to arsenic and antimony are removed, or at least significantly reduced, from the copper bullion by selective conversion of these elements. The specific conditions, such as time, temperature and addition of slag forming additives, required for this first step depends on the raw material used, i.e. the composition of the copper bullion. However, these specific conditions can easily be determined by the skilled person through mere routine tests. The slag formed during the first step is removed before the next step.

During the second step, antimony and arsenic are oxidized to a lead oxide based slag, preferably a lead silicate slag. The lead oxide based slag is formed by the addition of a lead-containing component, such as lead oxide. It is also possible that the lead-containing component is lead-containing waste.

The specific conditions required for this second process metallurgical step can be determined by the skilled person by mere routine tests. However, it should be noted that the second step may preferably be repeated in order to achieve the desired result, i.e. the desired degree of purity of the resulting copper bullion.

It has been found that the present invention provides an efficient process of removing especially antimony, but also arsenic, from a copper bullion.

It has been discovered, in accordance with the present invention, that it is possible to oxidize antimony and arsenic to a lead silicate slag where elements which have high affinity to antimony and/or arsenic are first removed from, or at least significantly reduced from, the bullion. It is especially important to remove iron, which has a high affinity to especially antimony. The removal of iron can be accomplished by forming a fayalite slag in which the iron is bound. In order to facilitate the formation of such a slag, an addition of silica is suitably made. The addition of silica can for example be made in the form of sand. The fayalite slag is removed before oxidation of the antimony and arsenic to the lead oxide based slag.

According to one embodiment of the invention, soda is added to the melt in addition to silica during the first process metallurgical step in order to facilitate the conversion.

According to another preferred embodiment of the invention, copper oxide is added to the melt during the first process metallurgical step in order to facilitate the conversion and to increase the copper content of the metallic melt.

According to another embodiment of the invention, silica and/or soda is added to the melt during the second process metallurgical step in order to facilitate the formation of the lead silicate slag.

The two separate process metallurgical steps may suitably be performed in the same furnace. Thereby, transferring the melt between two furnaces is avoided which results in a more efficient process and saves energy otherwise required to reheat the melt to a suitable temperature in a second furnace. The furnace used for the process according to the invention may preferably be a rotating furnace.

Moreover, the two process metallurgical steps may suitably be performed under agitation by gas stirring. The purpose of the gas stirring is to improve the process and especially to reduce the time required for the two steps. Gas stirring may for example be performed by means of top lance, a purging plug or a tuyere. However, in order to avoid the risk of copper being transferred to the slag, the gas stirring is preferably conducted at a moderate rate. The rate of gas stirring should preferably be adapted to the specific furnace used and the conditions thereof, and can be determined by the skilled person through routine tests.

The first process metallurgical step can suitably be monitored by spectroscopy in order to determine the degree of conversion. Thereby, it is possible to determine when the conversion has been performed to a sufficient degree for enabling the desired result during the second process metallurgical step, i.e. that the content of elements with affinity to antimony and/or arsenic has been reduced in the melt to the desired level.

Furthermore, the second process metallurgical step can suitably be monitored by utilization of an oxygen probe in order to determine the degree of refining.

The method of the present invention results in an ordinary fayalite slag comprising essentially silicon dioxide and iron, a lead silicate slag rich in arsenic and antimony, and a copper bullion comprising noble metals and having a low impurity content. The fayalite slag can for example be recycled to a smelting stage of the copper refining process and the lead silicate slag rich in antimony can be processed in accordance with conventional methods.

The resulting copper bullion which is low in, or essentially free from, antimony and/or arsenic can easily be refined using conventional methods in order to extract the valuable metal contents thereof. For example, the resulting copper bullion can be recycled to the converters of a copper refining process or even to the electrolysis stage of a copper refining process in cases where the copper bullion comprises a sufficiently high content of copper.

According to one embodiment of the invention, the melt is held at a temperature sufficient to keep it in the melted state after the second process metallurgical step. The purpose of this holding time is to reduce the oxygen potential of the melt and thereby minimize the risk of loss of copper to the slag.

In accordance with a preferred embodiment of the invention, a copper bullion is melted and SiO₂ is added to the melt in an amount balanced to the iron content of the bullion. The melt is converted such that a fayalite slag, essentially comprising silicon dioxide and iron, is formed on the surface of the melt. Essentially all iron is transferred to and bound in the slag. The fayalite slag is thereafter removed from the surface of the melt by conventional methods. After the fayalite slag has been removed, lead is added to the melt balanced to the SiO₂ content such that a lead silicate slag is formed on the surface of the melt. Arsenic and antimony are oxidized to the lead silicate slag and thereby bound in the slag. The slag is thereafter removed from the melt leaving a copper bullion comprising noble metals and having a low impurity content, such as arsenic and antimony. The removed lead silicate slag comprises high amounts of antimony but is much easier to process than the original copper bullion. The step of formation of the lead silicate slag and oxidation of arsenic and antimony to the slag is preferably repeated a plurality of times in order to achieve the desired low impurity content of the melt.

The method according to the present invention has been found to be especially suitable for treatment of speiss which often comprises high amounts of iron, antimony and arsenic. It has been found that the antimony content can easily be reduced from about 10 % to below 1 % and the arsenic content from about 12 % to about 1.5 % by means of the process according to the invention. Where the second step is repeated the antimony content can be reduced to 0.5 % or even lower.

According to an alternative embodiment of the present invention, the second step is repeated at least once such that the process comprises three separate process metallurgical steps. During the first step, elements with high affinity to antimony and/or arsenic are selectively converted and bound in a first slag, which is thereafter removed. The second step comprises formation of a lead oxide based second slag and oxidation of antimony and/or arsenic to said lead oxide based second slag, which is thereafter removed. The third step comprises formation of a lead oxide based third slag to which antimony and/or arsenic remaining in the metallic melt are oxidized. After the oxidation in the third step, the lead oxide based third slag is reduced in order to lower the copper content in the slag. The metallic phase obtained will have a slightly higher antimony content compared to cases where the reduction is not performed. However, the copper content of the third slag is reduced. The metallic phase obtained after the reduction, i.e. the resultant copper bullion, can be recycled back to and reduced in a process according to the invention in order to further reduce the antimony content thereof.

The process of the present invention is especially suitable for refining copper bullion obtained during production of essentially pure copper from an ore. However, it is apparent to the skilled person that the above described process can also be used during treatment processes of other types of copper-containing materials, for example treatment of electronic wastes.

### LABORATORY TEST

A laboratory test of the two step metallurgical process according to the invention was performed on a speiss. The approximate composition of the speiss used is given in Table 1. It should be noted that not all elements have been analysed and the sum of the elements analyzed is given at the bottom of the table.

**Table 1.**

| Element/Compound | [% by weight] |
|---|---|
| S | 1.5 |
| Fe | 5.6 |
| Ni | 8.6 |
| Cu | 51.4 |
| Zn | 0.4 |
| As | 7.7 |
| Sn | 4.8 |
| Sb | 8.7 |
| Pb | 0.25 |
| Bi | 0.003 |
| SiO₂ | 0.15 |
| Ag | 0.21 |
| Total | 89.3 |

In the first step, iron, which has a high affinity to antimony, was separated from the speiss by formation of a fayalite slag. The fayalite slag was formed by addition of 4.2 g SiO₂ and 100 g soda to 200 g of speiss. The fayalite slag was removed and 175.5 g of speiss essentially free from iron was left after the first step.

In the second step, 150 g PbO, 88 g soda and 30 g SiO₂ was added in order to form a lead silicate slag. Antimony and arsenic were oxidized to the lead silicate slag which then was removed.

The results showed that the content of antimony in the resulting metal phase after the second step was below 1 %, compared to the original content of 8.7 %, even though the second step was only performed once. The arsenic content was not evaluated during this test.

The results show that it is possible to significantly reduce the antimony content of a copper bullion by means of the process according to the present invention.

### COMPARATIVE LABORATORY TEST

A laboratory test of a comparative process was performed on a speiss. The approximate composition of the speiss used is given in Table 1.

The process comprised one single process metallurgical step wherein 100 g PbO, 50 g soda and 8 g SiO₂ was added to 100 g of melted speiss. It was found that two seperate metallic phases were formed. The first metallic phase essentially consisted of lead and was formed in the bottom of the furnace. The second metallic phase was a copper based phase formed on top of the lead phase. This is probably due to the fact that the charging of the sand was made after a major amount of the lead oxide had already been reduced and formed on the bottom of the furnace.

The test showed that arsenic had been reduced to below 1 % in the copper based metallic phase. However, the antimony content had only been slightly reduced to about 8 %.

From the above it is clear that a single process metallurgical step in which a lead silicate slag is used is not sufficient to reduce the content of antimony in a copper bullion.

### FULL SCALE TEST

A full scale test of the process according to the invention was performed on a speiss in a so called Kaldo furnace comprising a converter lance.

The composition of the speiss varied extensively, i.e. the speiss was non-homogenous in nature. The composition of the spies was therefore estimated by analyzing four samples and taking the mean value of these samples. The composition of the four samples and the estimated composition of the speiss is given in Table 2. It should however be noted that this estimated composition is not necessarily the true composition due to the variations in the composition.

**Table 2**

| Element /compound | Sample 1 [wt%] | Sample 2 [wt%] | Sample 3 [wt%] | Sample 4 [wt%] | Mean composition [wt%] |
|---|---|---|---|---|---|
| S | 2.1 | 1.8 | 2.6 | 2.7 | 2.3 |
| Fe | 4.3 | 5.3 | 6.7 | 3.6 | 5.0 |
| Ni | 10.3 | 6.7 | 8.7 | 9.9 | 8.9 |
| Cu | 54.4 | 53.8 | 52.9 | 57.7 | 54.7 |
| Zn | 0.23 | 0.27 | 0.25 | 0.29 | 0.26 |
| As | 13.32 | 11.45 | 12.44 | 12.47 | 12.42 |
| Sn | 3.2 | 3.17 | 2.53 | 3.2 | 3.03 |
| Sb | 10.6 | 10.5 | 11.4 | 9.3 | 10.5 |
| Pb | 0.094 | 0.134 | 0.077 | 0.135 | 0.110 |
| Bi | 0.001 | 0.001 | 0 | 0.001 | 0.001 |
| SiO₂ | 0.10 | 0.11 | 0.09 | 0.08 | 0.10 |
| Ag | 0.19 | 0.19 | 0.17 | 0.16 | 0.18 |
| Total | 98.785 | 93.446 | 97.837 | 99.518 | 97.397 |

During the first step, 4.1 tons of speiss was melted and 85 kg of SiO₂ was added in order to form a fayalite slag. The step was performed in an oxidizing environment. The fayalite slag was removed before the next step.

During the second step, 500 kg of lead oxide and 70 kg of SiO₂ was added in order to form a lead silicate slag. The step was performed in an oxidizing environment. The lead silicate slag was thereafter removed.

The second step was repeated but with an addition of 250 kg PbO and 30 kg of SiO₂. The formed lead silicate slag was thereafter removed.

Sample 5, which is a sample of the metal phase taken after the speiss had been converted in the first step, was also analyzed. The composition of said sample is shown in Table 3. At the same time as sample 5 was taken, the slag comprised about 16 % Fe.

**Table 3**

| Composition | Au [g/ton] | Ag [g/ton] | Fe [wt%] | Pb [wt%] | Sb [wt%] | As [wt%] | Pd [wt%] | Pt [wt%] | Cu [wt%] |
|---|---|---|---|---|---|---|---|---|---|
| Sample 5 | 143.6 | 5680 | 0.32 | 1.10 | 10.7 | 9.0 | 34 | 2 | 61 |
| Resulting metal phase | 2422 | 88702 | 0.08 | 0.77 | 0.51 | 1.46 | 552 | 24 | 85 |

The composition of the metal phase which resulted after the second step had been repeated is also shown in Table 3.

It should be noted that the test was performed in a non-clean furnace. The significant increase of especially Au and Ag in the resulting metal phase compared to Sample 5 is a result of that fact that large amounts of these metals where bound in the bricks of the furnace before the start of the test. Thus, the increase of these metals is not expected during normal use of the process according to the invention.

The results show that the content of antimony was reduced from 10.7 % to 0.51 % from the first step to the resulting metal phase. Furthermore, the content of arsenic was reduced from 9 % to 1.46 %. Moreover, it is clear that the iron content was significantly reduced during the process. This is the result of the first step of the process, i.e. the formation of the fayalite slag.

Thus, it is clear that it is possible to significantly reduce the amount of antimony and arsenic in a copper bullion by means of the process according to the invention.

## Claims

1. Process for refining of copper bullion comprising antimony and/or arsenic, the process comprising the steps of:
i. selective conversion of at least one element in the copper bullion having affinity to antimony and/or arsenic to a first slag followed by removal of said first slag; and
ii. formation of a second slag and oxidation of antimony and/or arsenic to said second slag.

2. Process according to claim 1 wherein said first slag is a fayalitic slag.

3. Process according to claims 1 or 2 wherein said second slag is a lead oxide based slag.

4. Process according to any of claims 1 to 3 wherein step i comprises selective conversion of iron.

5. Process according to any of the preceding claims wherein step i comprises adding silica balanced to an iron content of the copper bullion to form a fayalitic slag

6. Process according to claim 4 wherein the silica addition is made when the copper bullion is melted or during melting of the copper bullion.

7. Process according to any of the preceding claims wherein a lead-containing component is added to the melt during step ii in order to form a lead silicate slag, said lead silicate slag being the second slag.

8. Process according to claim 7 wherein the lead-containing component is lead-containing waste.

9. Process according to any of the preceding claims wherein step i and/or ii is performed in a rotating furnace.

10. Process according to any of the preceding claims wherein steps i and ii are performed in the same furnace.

11. Process according to any of the preceding claims wherein step i and/or ii is assisted by gas stirring.

12. Process according to claim 11 wherein the gas stirring is performed by a top lance, a purging plug or a tuyere.

13. Process according to any of the preceding claims wherein an addition of copper oxide is made during step i.

14. Process according to any of the preceding claims wherein step ii is monitored by means of an oxygen probe.

15. Process according to any of the preceding claims wherein step i is monitored by spectroscopy.

16. Process according to any of the preceding claims wherein step ii is repeated after removal of the second slag.

17. Method of reducing an antimony content of a copper bullion in a metallurgical process according to any of the preceding claims, which process comprises the steps of selectively converting an element having affinity to antimony to a first slag, removing said first slag, forming a lead oxide based second slag, oxidizing antimony such that it will be bound in said lead oxide based slag, and removing said lead oxide based slag.

## Patentansprüche

1. Verfahren zum Raffinieren eines Kupferbarrens, umfassend Antimon und/oder Arsen, wobei das Verfahren die folgenden Schritte umfasst:
i. selektive Umwandlung von mindestens einem Element in dem Kupferbarren, das eine Affinität mit Antimon und/oder Arsen aufweist, zu einer ersten Schlacke, gefolgt von der Entfernung der ersten Schlacke; und
ii. Bildung einer zweiten Schlacke und Oxidation von Antimon und/oder Arsen zu der zweiten Schlacke.

2. Verfahren nach Anspruch 1, wobei die erste Schlacke fayalitische Schlacke ist.

3. Verfahren nach Anspruch 1 oder 2, wobei die zweite Schlacke bleioxidbasierte Schlacke ist.

4. Verfahren nach einem der Ansprüche 1 bis 3, wobei Schritt i die selektive Umwandlung von Eisen umfasst.

5. Verfahren nach einem der vorhergehenden Ansprüche, wobei Schritt i das Zugeben von Kieselsäure umfasst, die auf einen Eisengehalt des Kupferbarrens ausgewogen ist, um eine fayalitische Schlacke zu bilden.

6. Verfahren nach Anspruch 4, wobei die Kieselsäurezugabe erfolgt, wenn der Kupferbarren geschmolzen ist oder während des Schmelzens des Kupferbarrens.

7. Verfahren nach einem der vorhergehenden Ansprüche, wobei der Schmelze während Schritt ii eine bleihaltige Komponente zugegeben wird, um eine Bleisilicatschlacke zu bilden, wobei die Bleisilicatschlacke die zweite Schlacke ist.

8. Verfahren nach Anspruch 7, wobei die bleihaltige Komponente bleihaltiger Abfall ist.

9. Verfahren nach einem der vorhergehenden Ansprüche, wobei Schritt i und/oder ii in einem Rotationsofen durchgeführt wird/werden.

10. Verfahren nach einem der vorhergehenden Ansprüche, wobei Schritt i und ii in dem gleichen Ofen durchgeführt werden.

11. Verfahren nach einem der vorhergehenden Ansprüche, wobei Schritt i und/oder ii durch Gasrühren unterstützt wird/werden.

12. Verfahren nach Anspruch 11, wobei das Gasrühren mit einer oberen Lanze, einem Spülstopfen oder einer Düse durchgeführt wird.

13. Verfahren nach einem der vorhergehenden Ansprüche, wobei eine Zugabe von Kupferoxid während Schritt i erfolgt.

14. Verfahren nach einem der vorhergehenden Ansprüche, wobei Schritt ii mittels einer Sauerstoffsonde überwacht wird.

15. Verfahren nach einem der vorhergehenden Ansprüche, wobei Schritt i durch Spektroskopie überwacht wird.

16. Verfahren nach einem der vorhergehenden Ansprüche, wobei Schritt ii nach der Entfernung der zweiten Schlacke wiederholt wird.

17. Verfahren zum Reduzieren eines Antimongehalts eines Kupferbarrens in einem metallurgischen Verfahren nach einem der vorhergehenden Ansprüche, wobei das Verfahren die Schritte des selektiven Umwandelns eines Elements mit einer Affinität zu Antimon zu einer ersten Schlacke, Entfernen der ersten Schlacke, Bilden eines bleioxidbasierten zweiten Schlacke, Oxidieren von Antimon, so dass es in der bleioxidbasierten Schlacke gebunden wird, und Entfernen der bleioxidbasierten Schlacke umfasst.

## Revendications

1. Procédé d'affinage d'un lingot de cuivre comprenant de l'antimoine et/ou de l'arsenic, le procédé comprenant les étapes de :
i. transformation sélective d'au moins un élément dans le lingot de cuivre ayant une affinité pour l'antimoine et/ou l'arsenic en premières scories puis retrait desdites premières scories ; et
ii. formation de deuxièmes scories et oxydation de l'antimoine et/ou de l'arsenic vers lesdites deuxièmes scories.

2. Procédé selon la revendication 1 dans lequel lesdites premières scories sont des scories fayalitiques.

3. Procédé selon les revendications 1 ou 2 dans lequel lesdites deuxièmes scories sont des scories à base d'oxyde de plomb.

4. Procédé selon l'une quelconque des revendications 1 à 3 dans lequel l'étape i comprend la transformation sélective de fer.

5. Procédé selon l'une quelconque des revendications précédentes dans lequel l'étape i comprend l'ajout de silice équilibrée sur une teneur en fer du lingot de cuivre pour former des scories fayalitiques.

6. Procédé selon la revendication 4 dans lequel l'ajout de silice est réalisé quand le lingot de cuivre est fondu ou pendant la fusion du lingot de cuivre.

7. Procédé selon l'une quelconque des revendications précédentes dans lequel un composant contenant du plomb est ajouté à la masse fondue pendant l'étape ii afin de former des scories de silicate de plomb, lesdites scories de silicate de plomb étant les deuxièmes scories.

8. Procédé selon la revendication 7 dans lequel le composant contenant du plomb est un déchet contenant du plomb.

9. Procédé selon l'une quelconque des revendications précédentes dans lequel l'étape i et/ou ii est effectuée dans un four rotatif.

10. Procédé selon l'une quelconque des revendications précédentes dans lequel les étapes i et ii sont effectuées dans le même four.

11. Procédé selon l'une quelconque des revendications précédentes dans lequel l'étape i et/ou ii est assistée par brassage au gaz.

12. Procédé selon la revendication 11 dans lequel le brassage au gaz est effectué par une lance supérieure, un bouchon de purge ou une tuyère.

13. Procédé selon l'une quelconque des revendications précédentes dans lequel un ajout d'oxyde de cuivre est réalisé pendant l'étape i.

14. Procédé selon l'une quelconque des revendications précédentes dans lequel l'étape ii est surveillée au moyen d'une sonde d'oxygène.

15. Procédé selon l'une quelconque des revendications précédentes dans lequel l'étape i est surveillée par spectroscopie.

16. Procédé selon l'une quelconque des revendications précédentes dans lequel l'étape ii est répétée après le retrait des deuxièmes scories.

17. Procédé de réduction d'une teneur en antimoine d'un lingot de cuivre dans un procédé métallurgique selon l'une quelconque des revendications précédentes, lequel procédé comprend les étapes consistant à transformer sélectivement un élément ayant une affinité pour l'antimoine en premières scories, retirer lesdites premières scories, former des deuxièmes scories à base d'oxyde de plomb, oxyder 1"antimoine de telle sorte qu'il soit lié dans lesdites scories à base d'oxyde de plomb, et retirer lesdites scories à base d'oxyde de plomb.
